(19) Europäisches Patentamt
European Patent Office
Office européen des brevets

(11) Publication number: **0 046 973**
**B1**

(12) **EUROPEAN PATENT SPECIFICATION**

(45) Date of publication of patent specification: 23.01.85

(51) Int. Cl.$^4$: **C 01 G 49/06**, C 01 G 49/10

(21) Application number: 81106592.9

(22) Date of filing: 25.08.81

(54) **Process for the production of high-purity iron oxide.**

(30) Priority: 29.08.80 JP 119309/80

(43) Date of publication of application:
10.03.82 Bulletin 82/10

(45) Publication of the grant of the patent:
23.01.85 Bulletin 85/04

(84) Designated Contracting States:
DE FR GB IT NL SE

(56) References cited:
DE-A-3 012 246
GB-A-1 264 717
GB-A-2 053 173
US-A-2 167 784
US-A-4 120 941
US-A-4 172 879

(73) Proprietor: Solex Research Corporation of Japan
23-9, Maruyama-cho
Shibuya-ku Tokyo (JP)

(72) Inventor: Watanabe, Morio
8-23-22, Minamitsukakuchi-cho
Amagasaki-shi Hyogo-ken (JP)
Inventor: Nishimura, Sanji
13-8, Fukakusa, Nanmei-cho Fushimi-ku
Kyoto-shi Kyoto-fu (JP)

(74) Representative: Vossius Vossius Tauchner Heunemann Rauh
Siebertstrasse 4 P.O. Box 86 07 67
D-8000 München 86 (DE)

EP 0 046 973 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for the production of high-purity iron oxide. High-purity iron oxide ($Fe_2O_3$) is generally obtained by heating high-purity iron sulphate or chloride, or metallic iron, in an oxygen atmosphere. Its production on an industrial scale is not yet economical.

According to US—A—4,172,879 a process for the selective separation of ferric iron from an aluminum fluoride aqueous solution containing ferric iron is effected by contacting said solution with an organic extractant phase consisting essentially of a mixture of a mono (higher alkyl-substituted phenyl) phosphoric acid and a di(higher alkyl-substituted phenyl) phosphoric acid dissolved in an inert diluent to thereby transfer the ferric iron to said organic extractant phase.

In GB—A—1264717 a process for the selective separation of one or more metals from an aqueous medium containing a mixture of their salts, by liquid-liquid extraction, is disclosed in which process an acid aqueous solution or dispersion containing halide ions, and in which two or more salts derived from different metals are present, is brought into contact with certain carboxylic acid esters the extracted metal being, if desired, subsequently recovered from the extract phase.

US—A—2,167,784 discloses a method of preparing an iron oxide material by treatment of the residual material comprising iron fluoride which is formed by the separation of a titanium fluoride compound from a mixture of titanium fluoride and iron fluoride compounds. The separated iron-fluoride-containing material is treated with a hydrogen and oxygen containing inorganic compound which forms with said iron fluoride at temperatures from 300 to 600°C. an oxygen compound of iron and a volatile fluoride.

It is the object of this invention to provide an economical process of the production of high-purity iron oxide. This object is achieved by the process according to the patent claims.

The particle size of the high-purity iron oxide produced by the process of this invention depends on the crystal size of ammonium iron fluoride or iron fluoride prior to thermal decomposition and consequently uniformity and sizing of the particle can be unrestrictedly attained.

Moreover, starting materials are not particularly limited due to utilization of any aqueous solution containing iron ions and economical advantages can be obtained because waste acid is regenerated by removal of iron ions therefrom. Starting materials are also obtained from the iron removal step of nonferrous metallurgy or the reprocessing step of sludge or slag. These starting materials are subjected to solvent extraction and the resulting ammonium iron fluoride or iron fluoride is subjected to repeated recrystallization to obtain the desired degree of purity.

Ammonium iron fluoride and iron fluoride used as a starting material in the present invention are obtained in the following sequential steps:

1. The first step in which iron ions in feed solutions are extracted into an organic phase by contact with an organic solution containing at least one alkyl phosphoric acid of the formulas (A)—(F), one alkyl or aryl dithio phosphoric acid of the formula (G), one carboxylic acid of the formula (H) or (I) and/or one hydroxyoxime (hydroxime) of formula (J) together with a petroleum hydrocarbon (a liquid hydrocarbon solvent) as a diluent.

2. The second step in which ammonium iron fluoride and iron fluoride are formed by bringing the resulting organic solution, i.e. the extract, into contact with a stripping agent containing HF, $NH_4HF_2$ and/or $NH_4F$ and then those are filtered off. The reactions can be illustrated by the following equation:

$$R_3Fe+3HF \rightleftarrows 3R\ H+FeF_3\downarrow$$

$$R_3Fe+3NH_4HF_2 \rightleftarrows 3R\ H+(NH_4)_3FeF_6\downarrow$$

$$R_3Fe+6NH_4F \rightleftarrows 3R\ NH_4+(NH_4)_3FeF_6\downarrow$$

where $R\cdot H$ and $R\cdot NH_4$ indicate proton-type and $NH_4$-type extractants.

Ammonium iron fluoride used in this invention is not limited to be in the form of $(NH_4)_3FeF_6$, but also includes $(NH_4)_2FeF_5$ and other compositions containing different ratios of $NH_4^+$ ions to $F^-$ ions or mixed crystals of iron fluoride and ammonium fluoride.

It is preferred to use the following aqueous solutions for extracting iron ions from the organic solution:

(1) Solutions containing not less than 40 g/l of HF;
(2) Solutions containing not less than 30 g/l of $NH_4F$; and
(3) Solutions containing not less than 40 g/l of $NH_4HF_2$.

Needless to say the solution may contain HF, $NH_4F$ and $NH_4HF_2$ in mixture.

The temperature does not influence the stripping operation to a significant degree.

Iron ion extraction into the organic solution defined in this invention can be performed by bringing an aqueous HCl, $H_2SO_4$, $HNO_3$, $CH_3COOH$ or $HNO_3$+HF solution containing iron ions into contact with an organic solution containing at least one alkyl phosphoric acid, alkyl or aryl dithio phosphoric acid, carboxylic acid and/or hydroxyoxime (hydroxime) as defined above together with a petroleum hydrocarbon as a diluent. The pH value of the aqueous feed solution for extraction of iron ions generally ranges from −1 to 7.

The extraction from strongly acidic aqueous solutions is preferred for the production of high-purity iron oxide because extraction of heavy metal ions other than iron ions is negligible in this case. Of course, the purity of iron product extracted at a pH range of 2 to 7 can be maintained at high levels by repeated scrubbing or washing prior to back-extracting the iron ions present in the organic solvent. Furthermore, the purity can be improved by repeated dissolution and crystallization of the crystalline-ammonium iron fluoride or iron fluoride after stripping with HF, $NH_4HF_2$ or $NH_4F$. This is especially remarkable in the case of ammonium iron fluoride having high crystallization tendency.

As shown in the following equation, iron oxide is obtained by thermal decomposition of ammonium iron fluoride or iron fluoride in a water or oxygen containing gas stream.

$$(NH_4)_3FeF_6+3/4O_2 \rightleftarrows 3NH_4F\uparrow+3/2F_2\uparrow+1/2Fe_2O_3$$

$$(NH_4)_3FeF_6+3/2H_2O \rightleftarrows 3NH_4F\uparrow+3HF\uparrow+1/2Fe_2O_3$$

$$FeF_3+2/3O_2 \rightleftarrows 3/2F_2\uparrow+1/3Fe_3O_4$$

$$FeF_3+3/2H_2O \rightleftarrows 3HF\uparrow+1/2Fe_2O_3$$

It is noted that the above equations show one example of iron oxides obtained by the present invention and the chemical species of iron oxide obtained in the process of this invention are not limited to the above example.

The extractants used to extract iron ions in this invention are as follows:

The alkyl phosphoric acids are selected from the compounds (A)—(F) shown below:

(A)

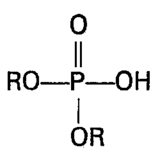

(B)

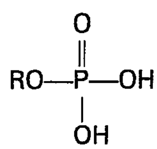

(C)

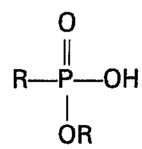

(D)

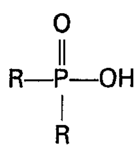

(E)

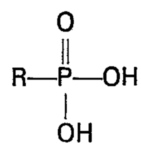

(F)

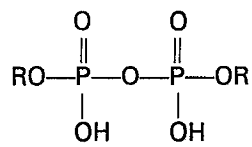

where R is an alkyl group containing from about 4 to 14 carbon atoms, D2EHPA (di-2-ethyl hexyl phosphoric acid) shown in the example set forth hereinafter belongs to the (A) group having as an alkyl group the $C_8H_{17}$ group.

The alkyl or aryl dithio phosphoric acids used in this invention include the compounds (G) shown below:

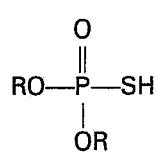

(G)

where R is an alkyl group having from about 4 to 18 carbon atoms or an aryl radical having up to 18 carbon atoms. D2EHDTPA (di-2-ethyl hexyl dithio phosphoric acid) shown in the example set forth hereinafter has the $C_8H_{17}$ group.

The carboxylic acids used in this invention include the compounds (H) and (I) shown below:

(H)

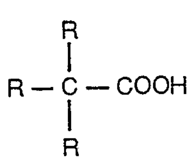

(I)

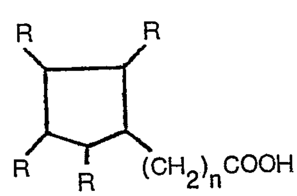

where R is an alkyl group having from about 4 to 18 carbon atoms. Versatic® acid 10 (V-10) shown in the example belongs to the (H) group having alkyl groups with 9 to 11 carbon atoms.

The hydroxyoximes used in this invention include compounds (J) shown below:

(J)

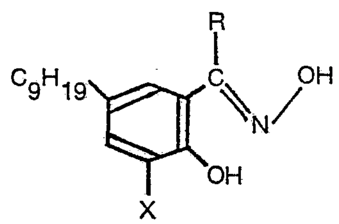

where R is a hydrogen atom, a methyl, phenyl or benzyl group and X is a chlorine or hydrogen atom. Of course similar salicylaldoximes may be used.

SME-529 (trade name, produced by Shell Chemical Co.) used in the example is a hydroxyoxime of the formula (J) in which $R=CH_3$.

The liquid petroleum hydrocarbons used in the process of this invention are aliphatic, alicyclic, aromatic or aromatic-aliphatic hydrocarbons or mixtures of these compounds. Technical mixtures of various liquid petroleum base hydrocarbons such as kerosene are often used.

Although the concentration of the extractant in the organic solvent depends on the iron ion concentration and the kind or concentration of anions and heavy metal ions extracted other than iron ions in the solution to be treated, it usually lies in the range of 2 to 90 volume %.

Iron ions to be extracted into an organic solution according to the process of this invention are obtained by contacting any desired aqueous solution from various sources such as iron removal processes in nonferrous extraction hydrometallurgy or waste acids obtained from surface treatment processes (pickling) of metallic materials and products with an organic solution containing at least one alkyl phosphoric acid, alkyl or aryl dithio phosphoric acid, carboxylic acid and/or hydroxyoxime as defined above and a liquid petroleum base hydrocarbon as a diluent.

Brief description of the drawings

Fig. 1 is a flow-sheet of the process for the production of high-purity iron oxide according to the present invention.

Fig. 2 is a flow-sheet of the process for the production of high-purity iron oxide from various aqueous solutions containing iron ions according to the present invention.

Fig. 3 is a graph showing a thermal decomposition curve of ammonium iron fluoride in an oxygen gas stream.

Fig. 4 is a graph showing the ratio of the amount of $NH_4HF_2$ contained in a stripping agent and the iron stripping percentage by one contact.

The present invention will be described in more detail with reference to the accompanying drawings. Of course, this invention is not limited to these embodiments.

As shown in the flow-sheet of Fig. 1, high-purity iron oxide (F) is obtained by bringing an organic solvent (A) containing iron ions into contact with a stripping agent (B) containing at least one of $NH_4HF_2$, HF and $NH_4F$ in the stripping zone (H) and then by heating ammonium iron fluoride or iron fluoride obtained in the separation stage (C) in a water or oxygen containing gas stream in the thermal decomposition zone (E).

The flow-sheet shown in Fig. 2 illustrates the production of high-purity iron oxide from an aqueous solution containing iron ions. Iron ions are extracted into an organic phase by bringing the aqueous solution (J) containing iron ions into contact with the organic solvent (A) in the extraction zone (K). The resulting organic solution into which iron ions have been extracted is stripped or back-extracted by contacting with a stripping solution (B) in the stripping zone (H) and ammonium iron fluoride or iron fluoride formed in the separation stage (C) is filtered off. Iron oxide is produced by heating the separated ammonium iron fluoride or iron fluoride in a water or oxygen containing gas stream in the thermal decomposition zone (E) according to the following equation:

$$(NH_4)_3FeF_6 + 3/2H_2O \rightleftarrows 3NH_4F\uparrow + 3HF\uparrow + 1/2Fe_2O_3$$

$$FeF_3 + 3/2O_2 \rightleftarrows 3/2F_2\uparrow + 1/2Fe_2O_3$$

$NH_4F$, HF and F gases generated in the thermal decomposition zone are absorbed in water and reused for extracting iron ions from the organic phase.

The present invention has the following advantages.

(1) Production of high-purity iron oxide is simplified, thus enlarging its utility as electronic material.

(2) Removal of iron in nonferrous extractive hydrometallurgy can be economically carried out and recovery efficiency can be enhanced by controlling loss of other coexisting metals.

(3) When applied to treatments of industrial wastes containing large amounts of iron and other valuable metals, the metal values can be recovered with great economical advantage.

(4) When applied to recovery of waste acids used in surface treatments of metallic materials and products, it facilitates control of pickling processes and it makes recycle of acids economically possible.

The following examples illustrate preferred embodiments.

Example 1

The thermal decomposition curve was investigated by gradually heating 100 mg of ammonium iron fluoride [$(NH_4)_3FeF_6$] in a gas stream (air containing oxygen. The observed change in weight at a temperature rising rate of 7°C/min. is shown in Fig. 3. Iron oxide of a purity at least of 99.999% was quantitatively obtained by heating up to 600°C.

As shown in Fig. 3, the thermal decomposition starts at about 180—230°C and iron fluoride is formed. Thermal decomposition proceeds further at 280—320°C and iron oxide is formed at 350—450°C. The ammonium iron fluoride used in this example was prepared by the following process.

Fe ions in inorganic acids are extracted into an organic solvent comporising 30% D2EHPA as an extractant together with 70% of an isoparaffine as a diluent. Then crystalline ammonium iron fluoride is precipitated by contacting the resultant organic solution with a stripping solution containing 100 g/l of $NH_4HF_2$. The precipitate is filtered off. The ammonium iron fluoride obtained is washed successively with isopropyl alcohol, ethanol and acetone, in that order and is left in a desiccator and maintained at 110°C for one hour.

Analysis of this sample after dissolving it in hydrochloric acid is shown below:

| | Fe | F | $NH_4$ | $H_2O$ |
|---|---|---|---|---|
| Mole number | 1 | 5.72 | 2.68 | 0.88 |
| Mole ratio | 1: | 6: | 3: | 1 |

Although D2EHPA is used as the extractant in this example, $(NH_4)_3FeF_6$ can be obtained by using other organic solutions from which the iron ions can be extracted with a stripping solution containing $NH_4HF_2$. An example is shown in Table 1. Stripping conditions are as follows:

Stripping agent: 100% $NH_4HF_2$
Temperature: 28.5°C
Contact time: 10 minutes
O/A=1.0

TABLE 1

| | | | |
|---|---|---|---|
| Concentration of extractant | 50% OPPA | 40% V-10 | 20% D2EHPA +30% OPPA* |
| Fe concentration in organic phase after stripping | 0.2 g/l | <0.01 g/l | 0.3 g/l |
| Stripping percentage | 97.1% | about 100% | 90.7% |
| Concentration of extractant | 30% D2EHDTPA | 10% OPPA +30% V-10 | 10% SME-529** +30% D2EHPA |
| Fe concentration in organic phase after stripping | 1.4 g/l | <0.01 g/l | 0.3 g/l |
| Stripping percentage | 79.7% | about 100% | 89.6% |

*OPPA (octyl phenol phosphoric acid)
**SME-529 (tradename, produced by Shell Chemical Co., hydroxime)

It is proved from the analysis that the precipitate obtained by these operations is ammonium iron fluoride. As shown in Fig. 4, the solubility of ammonium iron fluoride is dependent on the concentra-

tion on $NH_4HF_2$ and consequently the total amount of iron stripped from the organic phase is not converted into ammonium iron fluoride.

Example 2

Iron ions in the organic solvent can be transferred into the aqueous phase by contacting with an aqueous solution containing only HF, as shown in the following equation:

$$R_3Fe+3HF \rightleftarrows 3RH+FeF_3\downarrow$$

HF concentration of at least 40 g/l is suitable for the precipitation of $FeF_3$. The thermal decomposition of the obtained $FeF_3$ starts around 250—280°C in oxygen or water containing gas stream and the reaction is completed during heating up to 600°C. The accomplishment of thermal decomposition at around 400°C was proven experimentally by repeated tests.

The thermal decomposition reaction proceeds according to the following equation. The form or modification of the iron oxide obtained is not limited to be in form of $Fe_2O_3$ as shown in this equation.

$$FeF_3+3/4O_2 \rightleftarrows 3/2F_2\uparrow+1/2Fe_2O_3$$

$$FeF_3+3/2H_2O \rightleftarrows 3HF+1/2Fe_2O_3$$

HF gas generated in the thermal decomposition is absorbed in water and reused for further stripping of iron ions from the organic solution.

$FeF_3$ used in this example is prepared by the following process. $Fe^{3+}$ ions in an aqueous solution are extracted into an organic solvent comprising 30 volume % D2EHPA together with an isoparaffine as a diluent. Then crystalline iron fluoride is precipitated by contacting the resulting organic solution with stripping solutions containing 50 g/l HF, 75 g/l HF and 100 g/l HF, respectively. The results are shown in Table 2.

TABLE 2

| Stripping agent \ Extractant | 30% V-10 | 30% D2EHPA | 30% D2EHDTPA |
|---|---|---|---|
| HF 50 g/l | <0.1 g/l (about 100%) | 1.2 g/l (61.4%) | 1.55 g/l (20.4%) |
| HF 75 g/l | <0.1 g/l (about 100%) | 0.1 g/l (96.8%) | 1.0 g/l 53.2%) |
| HF 100 g/l | <0.1 g/l (about 100%) | <0.1 g/l (about 100%) | 0.15 g/l (92%) |

Stripping conditions:
Contact time: 10 minutes O/A=1.0

The data indicate the iron content in the organic phase after stripping.

As shown in Table 2, V-10 and D2EHDTPA as an extractant besides D2EHPA can be used for the preparation of $FeF_3$. Furthermore, $FeF_3$ can be prepared as a white precipitate by an alternative process in which an iron containing starting material is dissolved in an aqueous solution containing HF followed by an oxidation process. This white precipitate is analyzed as $FeF_3 . nH_2O$. As described above, the preparation of $FeF_3$ and $(NH_4)_3FeF_6$ is not limited to the solvent extraction technique.

Example 3

Extraction results of iron ions from the following aqueous solutions using various extractants are shown in Table 3.

Extraction conditions:
Initial iron concentration in the aqueous phase: 18.1—18.4 g/l
Contact time: 10 minutes
Temperature: 28.5°C
O/A=1.0

The contact time has a considerable influence on the amount of extracted iron ions.

TABLE 3

| | 300 g/l $H_2SO_4$ | | 210 g/l HCl | | 150 g/l $HNO_3$+ 30 g/l HF | |
|---|---|---|---|---|---|---|
| | Extracted amount (g/l) | % | Extracted amount (g/l) | % | Extracted amount (g/l) | % |
| 30% D2EHPA+ 70% n-paraffine | 10.2 | 56.4 | 8.3 | 43.9 | 10.4 | 57.1 |
| 30% D2EHDTPA+ 70% n-paraffine | 17.2 | 95.0 | 17.0 | 89.9 | 17.4 | 95.6 |
| 20% D2EHPA+30% OPPA +50% kerosene | 9.1 | 50.3 | 4.9 | 25.9 | 9.2 | 50.5 |
| 20% D2EHDTPA+ 30% V-10+ 50% kerosene | 9.6 | 53.0 | 7.9 | 41.8 | 8.9 | 48.9 |
| 50% OPPA+ 50% isoparaffine | 9.9 | 54.7 | 4.1 | 21.7 | 9.2 | 50.5 |
| 10% V-10+ 30% D2EHPA+ 60% isoparaffine | 10.2 | 56.4 | 8.2 | 43.4 | 10.5 | 57.7 |

The data shown in Table 3 indicate the amount of iron extracted into the organic phase and its extraction percentage.

As explained above iron ions extracted into an organic phase are stripped into an aqueous phase by means of the same method described in Examples 1 and 2 and iron oxide can be obtained by heating the resultant ammonium iron fluoride or iron fluoride in gas stream containing oxygen or $H_2O$.

$NH_4F$, HF, $NH_3$ and $F_2$ gases generated in the thermal decomposition may be absorbed in water and this absorption solution is reused for stripping the iron ions present in the organic phase.

Lowering of the reagent cost, which is required for stripping iron ions in the organic phase, achieved by recycling HF, $NH_4F$ and $NH_4HF_2$ as described above and control of water balance in the stripping solution decrease the production costs for iron oxide from the iron ions and consequently make this invention an economical process.

**Claims**

1. A process for producing high-purity iron oxide comprising: a step of contacting an iron ions-containing organic solution containing at least one alkyl phosphoric acid of the formulas (A)—(F)

(A)

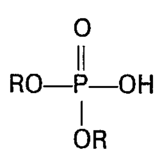

(B)

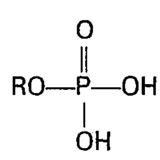

(C)

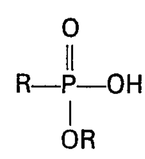

(D)

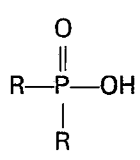

(E)

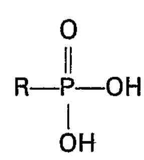

(F)

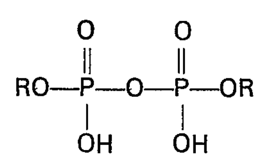

wherein R is an alkyl group containing from 4 to 14 carbon atoms, one alkyl or aryl dithio phosphoric acid of the formula (G)

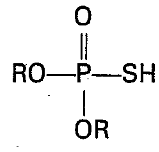

(G)

wherein R is an alkyl group having from 4 to 18 carbon atoms or an aryl radical having up to 18 carbon atoms, one carboxylic acid of the formulas (H) or (I)

(H)

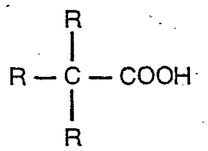

(I)

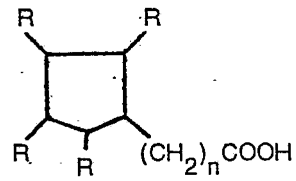

wherein R is an alkyl group having from 4 to 18 carbon atoms, and/or one hydroxyoxime of the formula (J)

(J)

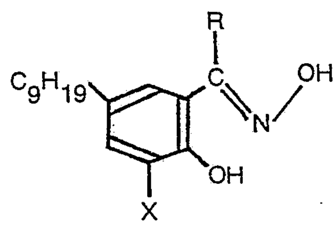

wherein R is a hydrogen atom, a methyl, phenyl or benzyl group and X is a chlorine or hydrogen atom, and a petroleum hydrocarbon as a diluent with an aqueous solution containing HF, $NH_4HF_2$ and/or $NH_4F$ to obtain ammonium iron fluoride or iron fluoride; and a step of heating the ammonium iron fluoride or iron fluoride obtained in a gas atmosphere containing oxygen or water.

2. A process according to Claim 1 in which an aqueous solution of HCl, $H_2SO_4$, $HNO_3$, $CH_3COOH$ or $HNO_3$+HF containing iron ions is brought into contact with an organic solution containing at least one alkyl phosphoric acid, alkyl and aryl dithio phosphoric acid, carboxylic acid and/or hydroxyoxime as defined in claim 1 together with a petroleum hydrocarbon as a diluent to obtain the iron ions-containing organic solution.

**Patentansprüche**

1. Ein Verfahren zur Erzeugung von hochreinem Eisenoxid, umfassend: eine Stufe des Zusammenbringens einer Eisenionen enthaltenden organischen Lösung, die mindestens eine Alkylphosphorsäure der Formeln (A) bis (F)

(A)

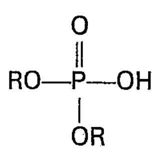

(B)

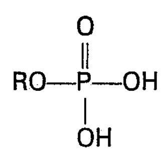

(C)

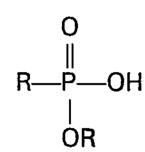

(D)

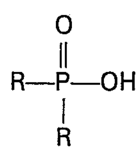

(E)

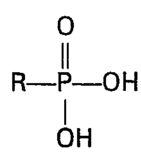

(F)

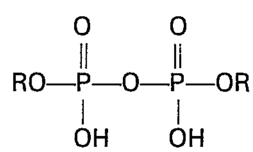

wobei R einen Alkylrest mit 4 bis 14 Kohlenstoffatomen bedeutet, eine Alkyl- oder Aryldithiophosphorsäure der Formel (G)

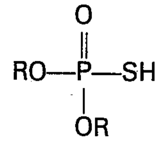

(G)

wobei R einen Alkylrest mit 4 bis 18 Kohlenstoffatomen oder einen Arylrest mit bis zu 18 Kohlenstoffatomen bedeutet, eine Carbonsäure der Formeln (H) oder (I)

(H)

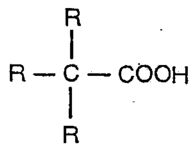

(I)

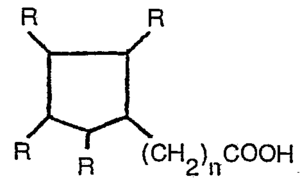

wobei R einen Alkylrest mit 4 bis 18 Kohlenstoffatomen bedeutet, und/oder ein Hydroxyoxim der Formel (J)

(J)

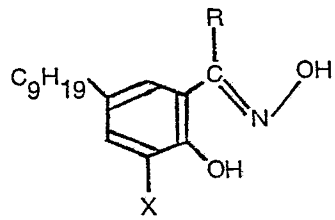

wobei R ein Wasserstoffatom, eine Methyl-, Phenyl- oder Benzylgruppe ist und X ein Chlor- oder Wasserstoffatom bedeutet, und einen Petroleum-Kohlenwasserstoff als Verdünnungsmittel enthält, mit einer wäßrigen Lösung, die HF, $NH_4HF_2$ und/oder $NH_4F$ enthält, wobei Ammoniumeisenfluorid oder Eisenfluorid erhalten wird, und eine Stufe des Erhitzens des erhaltenen Ammoniumeisenfluorids oder Eisenfluorids in einer Sauerstoff oder Wasser enthaltenden Gasatmosphäre.

2. Verfahren nach Anspruch 1, bei dem eine wäßrige Lösung von HCl, $H_2SO_4$, $HNO_3$, $CH_3COOH$ oder $HNO_3$+HF, die Eisenionen enthält, mit einer anorganischen Lösung zusammengebracht wird, die mindestens eine Alkylphosphorsäure, Alkyl- oder Aryldithiophosphorsäure, Carbonsäure und/oder Hydroxyoxim gemäß der Definition in Anspruch 1 zusammen mit einem Petroleum-Kohlenwasserstoff als Verdünnungsmittel enthält, um die Eisenionen enthaltende organische Lösung zu erhalten.

**Revendications**

1. Procédé pour la production d'oxyde de fer de grande pureté comprenant: une étape de mise en contact d'une solution organique contenant des ions fer, contenant au moins un acide alkyl phosphorique ayant les formules (A)—(F)

(A)

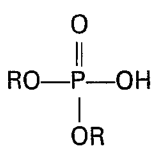

(B)

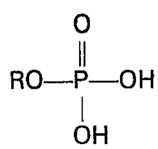

(C)

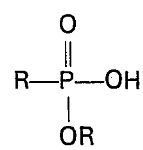

(D)

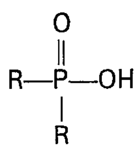

(E)

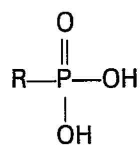

(F)

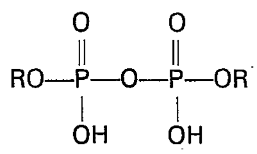

ou R est un groupe alkyle contenant 4 à 14 atomes de carbone, un acide alkyl- ou aryldithiophosphorique, de formule (G)

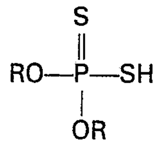

(G)

ou R est un groupe alkyle ayant 4 à 18 atomes de carbone ou un radical aryle ayant jusqu'à 18 atomes de carbone, un acide carboxylique ayant les formules (H) ou (I)

(H)

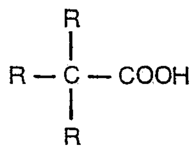

(I)

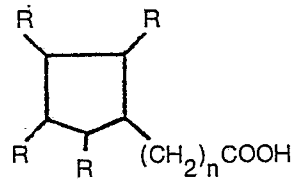

où R est un groupe alkyle ayant 4 à 18 atomes de carbone, et/ou une hydroxyoxime de formule (J)

(J)

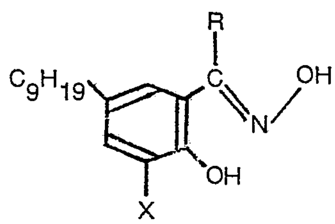

où R est un atome d'hydrogène, un groupe méthyle, phényle ou benzyle et X est un atome de chlore ou d'hydrogène, et un hydrocarbure de pétrole comme diluant, avec une solution aqueuse contenant HF, $NH_4HF_2$ et/ou $NH_4F$ pour obtenir du fluorure de fer et d'ammonium ou du fluorure de fer, et une étape de chauffage du fluorure de fer et d'ammonium ou du fluorure de fer obtenu dans une atmosphère gazeuse contenant de l'oxygène ou de l'eau.

2. Procédé selon la revendication 1, dans lequel une solution aqueuse de HCl, de $H_2SO_4$, de $NHO_3$, de $CH_3COOH$ ou de $HNO_3$+HF contenant des ions fer est mise en contact avec une solution organique contenant au moins un acide alkylphosphorique, un acide alkyl- et aryldithiophosphorique, un acide carboxylique et/ou une hydroxyoxime comme défini dans la revendication 1 avec un hydrocarbure de pétrole comme diluant pour obtenir la solution organique contenant des ions fer.

FIG.1

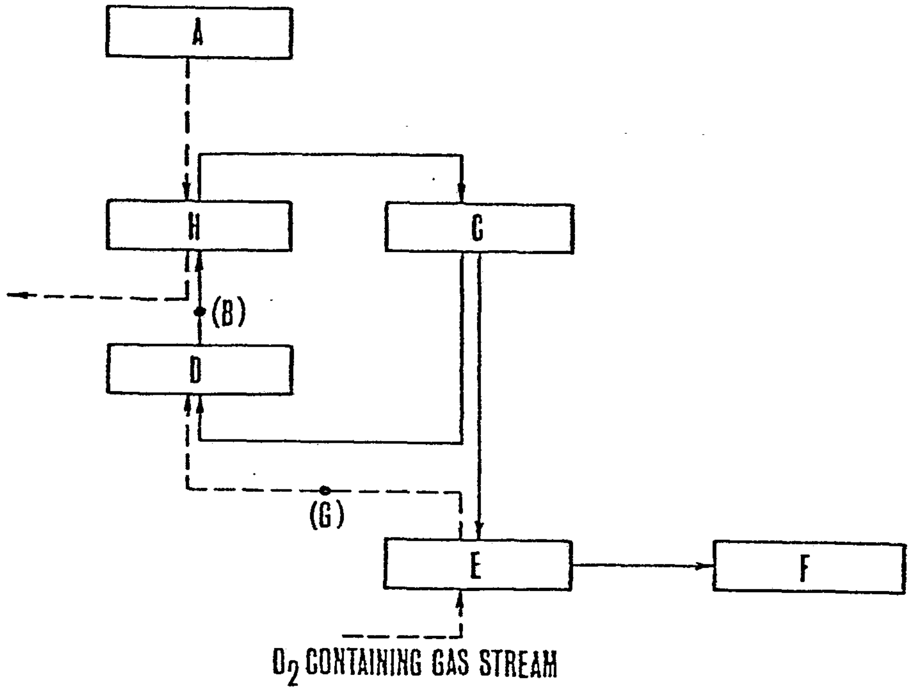
A
H
C
(B)
D
(G)
E
F
$O_2$ CONTAINING GAS STREAM

FIG.2

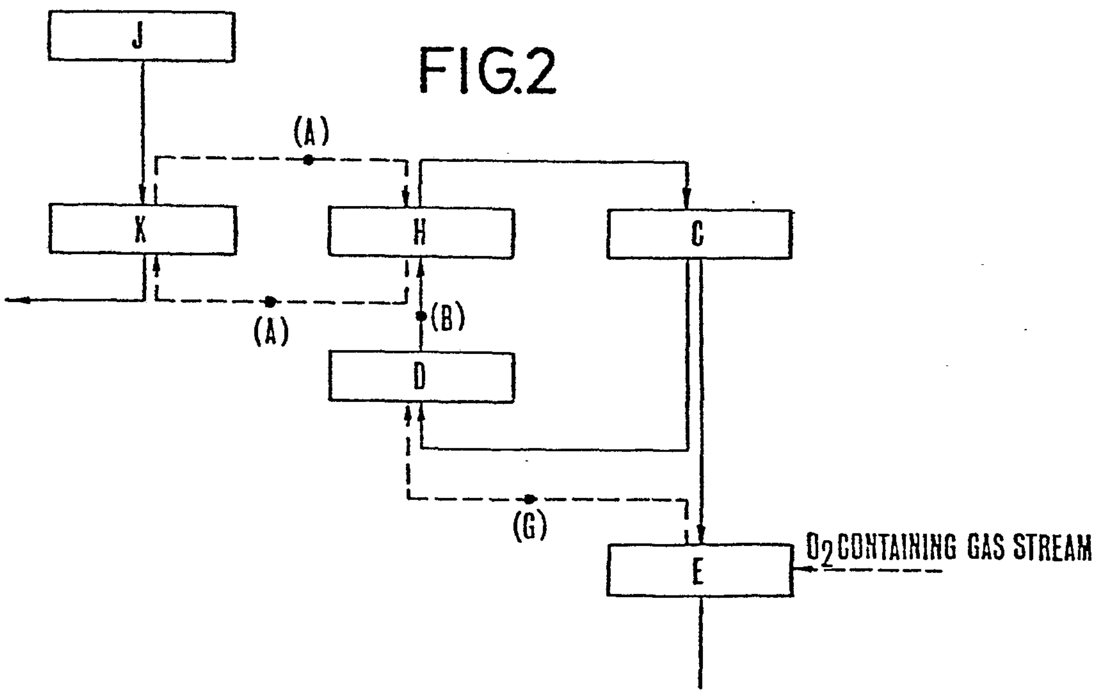
J
(A)
K
H
C
(A)
(B)
D
(G)
E
$O_2$ CONTAINING GAS STREAM

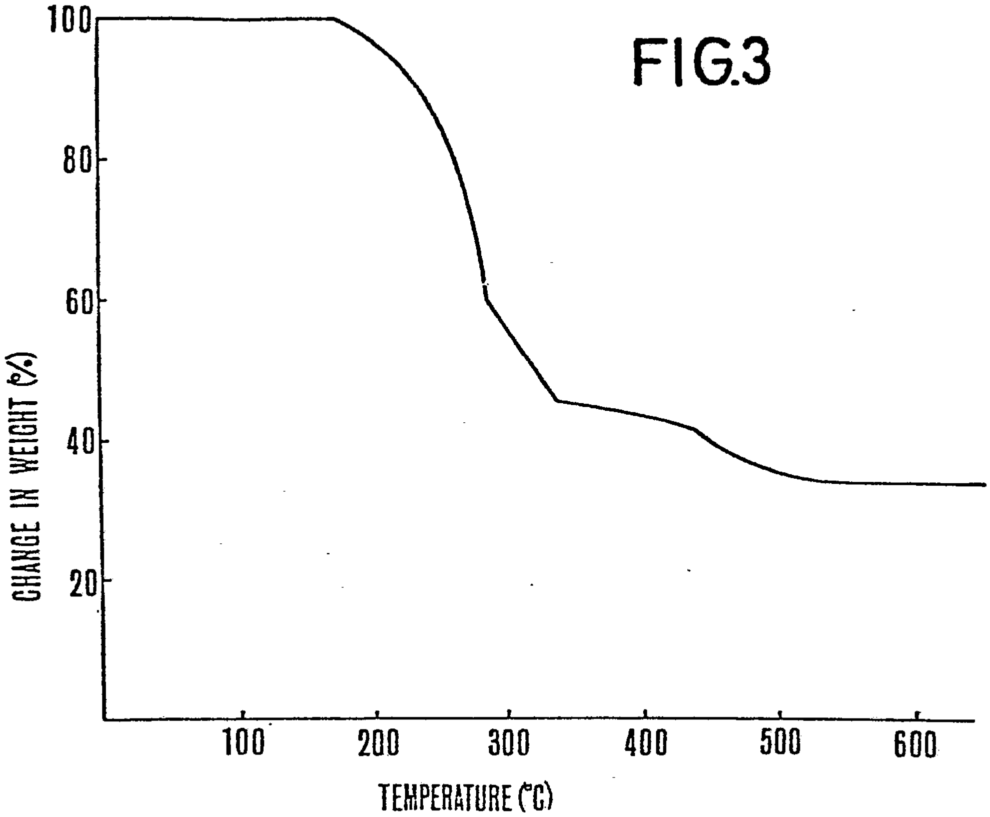
100
80
60
40
20
CHANGE IN WEIGHT (%)
100
200
300
400
500
600
TEMPERATURE (°C)

FIG.3

FIG.4

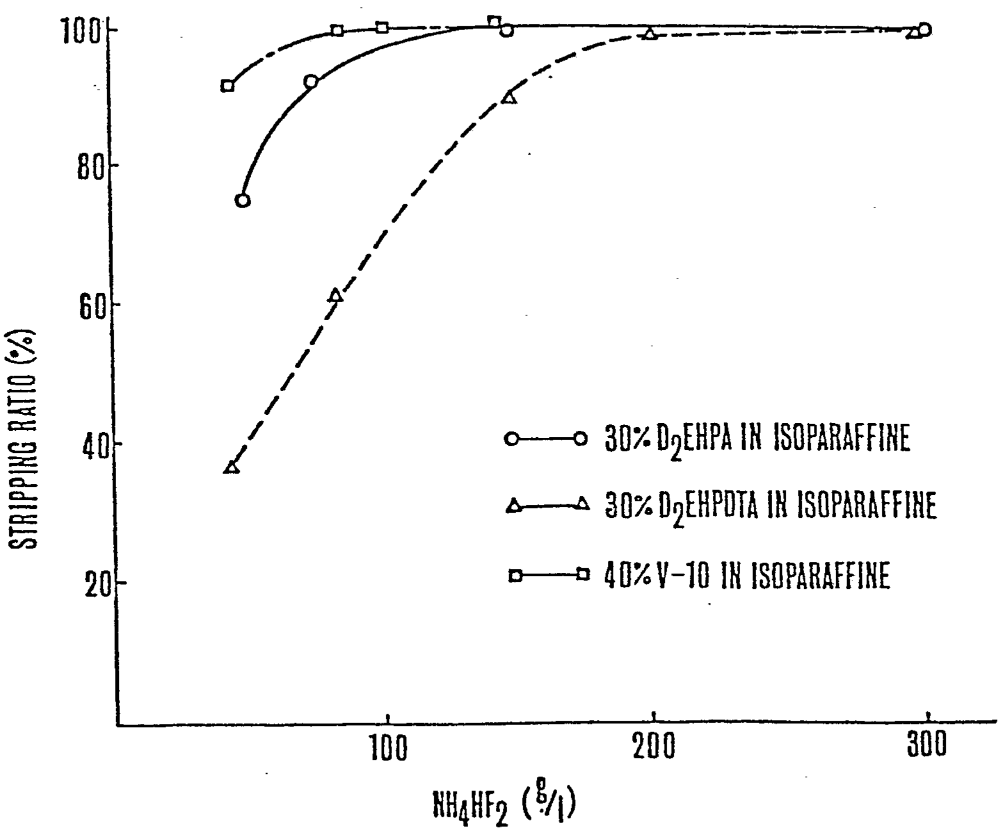
100
80
60
40
20
STRIPPING RATIO (%)
100
200
300
$NH_4HF_2$ (g/l)
30% $D_2$EHPA IN ISOPARAFFINE
30% $D_2$EHPDTA IN ISOPARAFFINE
40% V-10 IN ISOPARAFFINE